# EUROPEAN PATENT APPLICATION

(11) **EP 4 550 478 A1**
(43) Date of publication of application: **07.05.2025**
(21) Application number: 22963000.9
(22) Date of filing: 25.10.2022
(51) Int. Cl.: H01M 4/62, H01M 10/0565, H01M 10/0525

(54) **ELECTRODE ASSEMBLY, BATTERY CELL, BATTERY AND ELECTRIC DEVICE**

(71) Applicant: Contemporary Amperex Technology (Hong Kong) Limited, Hong Kong (HK)
(72) Inventor: ZHANG, Nannan, Ningde, Fujian 352100 (CN); XIE, Haotian, Ningde, Fujian 352100 (CN); CHEN, Xiao, Ningde, Fujian 352100 (CN); WANG, Donghao, Ningde, Fujian 352100 (CN); JING, Erdong, Ningde, Fujian 352100 (CN); SUN, Xin, Ningde, Fujian 352100 (CN)
(74) Representative: Gong, Jinping
(86) International application number: PCT/CN2022/127351
(87) International publication number: WO 2024/087013

(57) **Abstract**

Some embodiments of this application provide an electrode assembly, a battery cell, a battery, and an electrical device. The electrode assembly includes a positive electrode, a negative electrode, and a solid electrolyte. The positive electrode contains a lithium supplement material capable of releasing oxygen during first-cycle charging. The solid electrolyte contains a first additive. The first additive is a metal-organic framework compound with a porosity of 65% to 95%. The technical solutions put forward herein not only improve the cycle performance and energy density of the battery, but also improve the safety performance of the battery.

## Description

### TECHNICAL FIELD

This application relates to the technical field of batteries, and in particular, to an electrode assembly, a battery cell, a battery, and an electrical device.

### BACKGROUND

In recent years, lithium batteries have been applied in increasingly extensive fields such as wind, hydro, thermal, and solar power stations and other energy storage power systems, as well as electric bicycles, electric motorcycles, and electric vehicles, military equipment, and aerospace. The great development of the lithium batteries gives rise to higher requirements on the energy density, cycle performance, safety performance, and the like of the batteries.

Therefore, how to achieve a high level of the cycle performance, energy density, and safety performance of a lithium battery concurrently is a pressing technical challenge.

### SUMMARY

This application is developed in view of the above challenge, and aims to provide an electrode assembly, a battery cell, a battery, and an electrical device. The cycle performance, energy density, and safety performance of the lithium battery are all improved significantly.

A first aspect of this application provides an electrode assembly. The electrode assembly includes a positive electrode, a negative electrode, and a solid electrolyte. The positive electrode contains a lithium supplement material capable of releasing oxygen during first-cycle charging. The solid electrolyte contains a first additive. The first additive is a metal-organic framework compound with a porosity of 65% to 95%.

In this embodiment of this application, the electrode assembly includes a positive electrode, a negative electrode, and a solid electrolyte. The positive electrode contains a lithium supplement material. The lithium supplement material is a lithium-rich metal oxide, and releases oxygen during first-cycle charging. The solid electrolyte contains a first additive, and the first additive is a metal-organic framework compound with a porosity of 65% to 95%. With the lithium supplement material added into the positive electrode, the lithium supplement material with a high specific capacity and a low decomposition potential and rich in lithium metal provides sufficient active lithium for the positive electrode, compensates for the consumption of active lithium ions during long-term cycling of the lithium battery, and improves the cycle life and energy density of the battery. By using a solid electrolyte, it is prevented that the reducing gases such as H₂ and CO are generated by the decomposition of a conventional liquid electrolyte solution at high voltage. By adding a metal-organic framework compound with a porosity of 65% to 95% to the solid electrolyte, the crystallinity of the polymer can be reduced, the ionic conductivity of the solid electrolyte can be improved, and the oxygen generated by the lithium supplement material in the positive electrode can be absorbed promptly, thereby avoiding explosions caused by hydrogen-oxygen mixture, reducing the probability of bulging of the lithium battery, and in turn, improving the cycle performance, energy density, and safety performance of the battery comprehensively.

In a possible embodiment, the metal-organic framework compound includes a ligand structure. The ligand structure contains at least one metal ion among Mg, Mn, Fe, Co, Ni, Cu, or Zn and contains a ligand structure falling into a category of a nitrogen-containing heterocycle, a carboxylic acid, or an imidazole.

In this embodiment of this application, the metal-organic framework compound in the first additive includes a ligand structure, and the ligand structure not only contains at least one metal ion among Mg, Mn, Fe, Co, Ni, Cu, or Zn, but also contains a ligand structure falling into the category of a nitrogen-containing heterocycle, a carboxylic acid, or an imidazole. In this way, the first additive can physically adsorb the oxygen released by the lithium supplement material.

In a possible embodiment, the metal-organic framework compound includes at least one of M-MOF-74, NU-1500, ZIF-8, or NPF-200.

In this embodiment of this application, the metal-organic framework compound is at least one of M-MOF-74, NU-1500, ZIF-8, or NPF-200. In this way, the first additive can promptly and quickly absorb the oxygen released by the lithium supplement material.

In a possible embodiment, the M is at least one of Mg, Co, Ni, Cu, or Zn; and optionally, the M in the M-MOF-74 is at least one of Mn or Fe.

In this embodiment of this application, in order to absorb the oxygen released by the lithium supplement material, M-MOF-74 is added to the solid electrolyte. By making the M in the M-MOF-74 be at least one of Mg, Co, Ni, Cu, or Zn, the M-MOF-74 possesses the physical properties of a high specific surface area and a high porosity, so as to quickly adsorb oxygen and improve the safety performance of the lithium battery. Further, by making the M in the M-MOF-74 be at least one of Mn or Fe, the M-MOF-74 possesses the physical properties of a high specific surface area and a high porosity on the one hand; and on the other hand, the framework structure of the M-MOF-74 contains dense and coordinatively unsaturated metal vacancies available for bonding with oxygen to form chemical bonds through charge transfer, thereby undergoing irreversible chemical adsorption. The combination of the physical adsorption and the chemical adsorption can increase the amount of oxygen adsorption, thereby further improving the performance of the lithium battery.

In a possible embodiment, the NU in the NU-1500 includes at least one of Fe, Gr, or Sc.

In this embodiment of this application, in order to absorb the oxygen released by the lithium supplement material, NU-1500 is added to the solid electrolyte. By making the NU in the NU-1500 include at least one of Fe, Gr, or Sc, the oxygen released by the lithium supplement material can be well absorbed by physical adsorption, thereby improving the performance of the lithium battery.

In a possible embodiment, a particle diameter of the first additive is 20 nm to 5 µm, and optionally 50 nm to 2 µm.

In this embodiment of this application, when the M-MOF-74 particles are excessively large, the M-MOF-74 is prone to agglomeration and can hardly be dispersed evenly in other materials, thereby resulting in a low effect of oxygen adsorption. By keeping the particle diameter of the first additive within the range of 20 nm to 5 µm, especially 50 nm to 2 µm, the effect of the solid electrolyte in adsorbing oxygen can be further improved.

In a possible embodiment, a porosity of the first additive is 85% to 95%.

In this embodiment of this application, the higher the porosity, the faster the speed of oxygen absorption. By making the M-MOF-74 possess a relatively high porosity, that is, within the range of 65% to 95%, especially 85% to 95%, it is ensured that the oxygen released by the delithiated lithium supplement material can be quickly adsorbed, thereby avoiding the hazards of explosion and bulging caused by hydrogen-oxygen mixture.

In a possible embodiment, the solid electrolyte further includes a second additive. The second additive includes at least one selected from a polyolefin polymer, a polynitrile polymer, or a polycarboxylate ester polymer.

In this embodiment of this application, because the positive electrode contains a lithium supplement material and the lithium supplement material is delithiated only at a relatively high voltage, the electrolyte needs to match a high-voltage positive electrode system. With the second additive added into the solid electrolyte, and with the second additive containing at least one selected from a polyolefin polymer, a polynitrile polymer, or a polycarboxylate ester polymer, the solid electrolyte can match a high-voltage positive electrode system to increase the energy density of the battery.

In a possible embodiment, the solid electrolyte further includes a lithium salt. The lithium salt includes at least one selected from LiPF₆, LiBF₄, LiTFSI, LiClO₄, LiAsF₆, LiBOB, LiDFOB, LiTFOP, LiN(SO₂RF)₂, or LiN(SO₂F)(SO₂RF), in which the substituent RF is CₙF₂ₙ₊₁, and n is an integer ranging from 1 to 10.

In this embodiment of this application, when the lithium battery starts to work, lithium ions shuttle back and forth between the positive electrode and the negative electrode, requiring a lithium salt to assist in dissociating the lithium ions in the lithium battery. With the lithium salt added in the solid electrolyte, and with the lithium salt containing at least one selected from LiPF₆, LiBF₄, LiTFSI, LiClO₄, LiAsF₆, LiBOB, LiDFOB, LiTFOP, LiN(SO₂RF)₂, or LiN(SO₂F)(SO₂RF), the solid electrolyte can well assist in dissociating the lithium ions, thereby releasing a large number of active lithium ions.

In a possible embodiment, a thickness of the solid electrolyte is 10 to 100 µm, and optionally 20 to 40 µm.

In this embodiment of this application, the solid electrolyte plays a dual role as a separator and an electrolyte. If the thickness of the solid electrolyte is excessively small, the mechanical strength of the solid electrolyte is relatively low. During the charge and discharge of the lithium battery, the dendrites generated by the lithium battery may pierce the electrolyte film and cause a short circuit in the battery. If the thickness of the solid electrolyte is excessively thick, the solid electrolyte hinders the migration of lithium ions and intensifies the polarization of the lithium battery. By keeping the thickness of the solid electrolyte at 0 to 100 µm, especially 20 to 40 µm, on the one hand, sufficient mechanical strength of the solid electrolyte is ensured, and short circuits of the battery caused by dendrites piercing the solid electrolyte film are avoided. On the other hand, the normal migration of lithium ions and normal polarization of lithium ions are maintained.

In a possible embodiment, an ionic conductivity of the solid electrolyte at a room temperature is 10⁻⁷ to 10⁻² S/cm, and optionally 10⁻⁴ to 10⁻³ S/cm.

In this embodiment of this application, if the ionic conductivity of the solid electrolyte is excessively low, the electrical conductivity of the solid electrolyte is very low. By keeping the ionic conductivity of the solid electrolyte at a room temperature within a range of 10⁻⁷ to 10⁻² S/cm, and especially 10⁻⁴ to 10⁻³ S/cm, this embodiment of this application ensures fast movement of positive and negative ions in the lithium battery.

In a possible embodiment, a chemical stability window of the solid electrolyte is 4.9 to 5.3 V.

In this embodiment of this application, the lithium supplement material is delithiated only at a relatively high voltage, so as to increase the content of lithium in the positive active material and compensate for the capacity loss caused by a low first-cycle Coulombic efficiency. By keeping the chemical stability window of the solid electrolyte within the range of 4.9 to 5.3 V, this embodiment of this application matches the solid electrolyte with the high-voltage positive electrode, so as to increase the energy density of the battery.

In a possible embodiment, the lithium supplement material includes at least one selected from LiₓM₁O_{0.5(2+x)}, Li₂M₂O₃, Li₂M₃O₄, Li₃M₄O₄, Li₅M₅O₄, or Li₅M₆O₆, where M₁ includes at least one selected from Ni, Co, Fe, Mn, Zn, Mg, Ca, Cu, or Sn; M₂ includes at least one selected from Ni, Co, Fe, Mn, Sn, or Cr; M₃ includes at least one selected from Ni, Co, Fe, Mn, Sn, Cr, V, or Nb; M₄ includes at least one selected from Ni, Co, Fe, Mn, Sn, Cr, V, Mo, or Nb; M₅ includes at least one selected from Ni, Co, Fe, Mn, Sn, Cr, or Mo; M₆ includes at least one selected from Ni, Co, or Mn; and a valence of each element of M₁, M₂, M₃, M₄, M₅, and M₆ is lower than a highest oxidation state of the element.

In this embodiment of this application, in order to increase the lithium content in the positive active material, a lithium supplement material is added to the positive electrode. By using at least one of LiₓM₁O_{0.5(2+x)}, Li₂M₂O₃, Li₂M₃O₄, Li₃M₄O₄, Li₅M₅O₄, or Li₅M₆O₆ as a lithium supplement material, this embodiment increases the lithium content in the positive active material, thereby increasing the reversible capacity and energy density of the lithium battery.

In a possible embodiment, the lithium supplement material includes at least one selected from Li₂MnO₂, Li₅FeO₄, Li₆CoO₄, Li₂NiO₂, Li₂Cuₓ₁Ni_{1-x1-y1}M_{y1}O₂, Li₃VO₄, or Li₃NbO₄, in which M is at least one selected from Zn, Sn, Mg, Fe, or Mn, 0 < x1 ≤ 1, 0 ≤ y1 < 0.1, and optionally 0.2 ≤ x1 ≤ 0.8, and further optionally 0.4 ≤ x1 ≤ 0.6.

In this embodiment of this application, in order to increase the lithium content in the positive active material, a lithium supplement material is added to the positive electrode. By using at least one of Li₂MnO₂, Li₅FeO₄, Li₆CoO₄, Li₂NiO₂, Li₂Cuₓ₁Ni_{1-x1-y1}M_{y1}O₂, Li₃VO₄, or Li₃NbO₄ as a lithium supplement material, in which 0 ≤ x1 ≤ 1, 0 ≤ y1 < 0.1, and optionally 0.2 ≤ x1 ≤ 0.8, and further optionally 0.4 ≤ x1 ≤ 0.6, this embodiment increases the lithium content in the positive active material, thereby increasing the reversible capacity and energy density of the lithium battery.

In some optional embodiments, an average particle diameter of the lithium supplement material is 2 to 50 µm, and optionally 2 to 10 µm.

In this embodiment of this application, when the particle diameter of the lithium supplement material is excessively small, the slurry is prone to agglomerate and condense, and the slurry is more viscous and contains a lower solid content. If the particle diameter is excessively large, the polarization of the lithium ions in the lithium supplement material is intensified during deintercalation reactions, thereby lowering the lithium supplementation efficiency. By keeping the average particle diameter of the lithium supplement material within a range of 2 to 50 µm, and optionally 2 to 10 µm, the positive electrode slurry can be prevented from condensing and becoming more viscous, and the lithium supplementation efficiency can be improved.

In a possible embodiment, considering a total mass percent of the positive electrode as 100 wt%, a mass percent of the lithium supplement material is 0.1 wt% to 10 wt%, and optionally 2 wt% to 7 wt%.

In this embodiment of this application, if the content of the lithium supplement material in the positive electrode is excessively low, the lithium supplement material is insufficient to compensate for the loss of active lithium in the positive electrode; if the content of the lithium supplement material is excessively high, the reversible lithiation vacancies in the positive electrode will be insufficient, thereby impairing the energy density of the lithium battery. By keeping the mass percent of the lithium supplement material in the positive electrode within a range of 0.1 wt% to 10 wt%, especially 2 wt% to 7 wt%, this embodiment can compensate for the loss of active lithium in the positive electrode and ensure a high energy density of the lithium battery.

In a possible embodiment, the positive electrode further contains a positive active material. The positive active material includes a polyanion oxide. The polyanion oxide includes either an olivine structure or a NASICON structure, and optionally is lithium iron phosphate.

In this embodiment of this application, the polyanion oxide containing either an olivine structure or a NASICON structure, especially lithium iron phosphate, is used as a positive active material, thereby achieving a high capacity, cost-effectiveness, environment-friendliness, excellent thermal stability, and excellent charge-discharge cycle performance.

In a possible embodiment, the positive electrode further contains a positive active material. The positive active material includes a lithium transition metal composite oxide. The lithium transition metal composite oxide includes at least one of lithium cobalt oxide, lithium nickel oxide, lithium manganese oxide, lithium nickel manganese oxide, or lithium nickel cobalt aluminum oxide.

In this embodiment of this application, a lithium transition metal composite oxide containing at least one of lithium cobalt oxide, lithium nickel oxide, lithium manganese oxide, lithium nickel manganese oxide, or lithium nickel cobalt aluminum oxide is used as a positive active material of the lithium battery, thereby achieving cost-effectiveness, environment-friendliness, excellent thermal stability, and a relatively high specific capacity.

In a possible embodiment, the negative electrode is made of a material that is one of hard carbon, graphite, or carbon fibers, and optionally graphite.

In this embodiment of this application, the negative electrode is made of a material that is one of hard carbon, graphite, or carbon fibers, especially graphite, thereby ensuring free deintercalation of lithium ions and keeping normal migration of the lithium ions.

A second aspect of this application provides a battery cell. The battery cell includes the electrode assembly disclosed in any one of the embodiments in the first aspect.

A third aspect of this application provides a battery. The battery includes the electrode assembly disclosed in any one of the embodiments in the first aspect or the battery cell disclosed in the second aspect.

A fourth aspect of this application discloses an electrical device. The electrical device includes the electrode assembly disclosed in any one of the embodiments in the first aspect or the battery cell disclosed in the second aspect or the battery disclosed in the third aspect.

This application provides sufficient active lithium for the positive electrode by adding a lithium supplement material into the positive electrode of the lithium battery, thereby improving the cycle performance and energy density of the battery. A first additive is added into the solid electrolyte, and the first additive is a metal-organic framework compound with a porosity of 65% to 95%, thereby not only avoiding the generation of a reducing gas, but also promptly absorbing the oxygen generated by the lithium supplement material. This eliminates the hazard of explosion caused by hydrogen-oxygen mixture and the hazard of battery bulging, and improves not only the cycle performance and energy density of the lithium battery, but also the safety performance of the battery.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of an electrode assembly according to an embodiment of this application;
FIG. 2 is a schematic diagram of a battery cell according to an embodiment of this application;
FIG. 3 is an exploded view of the battery cell shown in FIG. 2 according to an embodiment of this application;
FIG. 4 is a schematic diagram of a battery module according to an embodiment of this application;
FIG. 5 is a schematic diagram of a battery according to an embodiment of this application; and
FIG. 6 is an exploded view of the battery shown in FIG. 5 according to an embodiment of this application.

### DETAILED DESCRIPTION OF EMBODIMENTS

The following describes in detail some embodiments of an electrode assembly, a battery cell, a battery, an electrical device of this application with due reference to drawings, but unnecessary details may be omitted in some cases. For example, the detailed description of a well-known matter or the repeated description of the essentially identical structure may be omitted. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

In this application, a number modified by "at least", "at most", "greater than", or "less than" represents a range inclusive of this number. For example, "at least one" means one or more, and "at least one of A or B" means A alone, B alone, or both A and B.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Lithium batteries are widely used in consumer electronics by virtue of a high energy density, a high power density, a long cycle life, and other advantages. In recent years, with the continuous development of electric vehicles and energy storage systems, people's requirements on the energy density of a battery keep increasing. Therefore, it is essential to develop a safe and reliable large-scale energy storage system with a high energy density.

During chemical formation of a lithium battery, the formation of a solid electrolyte interface (SEI) on the surface of a negative electrode consumes a large amount of active lithium. Especially, when some high-capacity alloy negative electrodes (silicon, germanium, or tin), transition metal oxides, or the like are added, the consumption of active lithium is further aggravated, thereby ultimately leading to a decline in the first-cycle Coulombic efficiency of the lithium battery and heavy loss of the irreversible capacity.

In order to improve the first-cycle Coulombic efficiency, reversible capacity, and energy density of lithium batteries, pre-lithiation of the positive or negative electrode is a method of effective lithium supplementing. In terms of negative electrode pre-lithiation, the most common method is to prelithiate the negative electrode material by using metal lithium powder or lithium foil, so as to provide sufficient active lithium for compensating for the consumption of an SEI film during first-cycle charging. However, this method is costly, complicated with respect to preparation process, and scarcely practical, and is not conducive to large-scale commercial application. In terms of positive electrode lithium supplementation, a positive electrode lithium supplement additive, such as Li₂O, Li₂O₂, Li₅FeO₄, or LiₓNiₐCu_{b}O_{0.5(2+x)}·yLi₂CO₃·zLiOH, where a + b = 1, 1 < x < 3, can increase the lithium content in the active material, and compensate for the capacity loss caused by the first-cycle Coulombic efficiency. However, oxygen is released after delithiation. In addition, such lithium supplement additives are usually of low electrochemical activity, and are delithiated only at a relatively high voltage. At a high voltage, carbonate ester electrolyte solutions are prone to generate reducing gases such as H₂ and CO. The reducing gases are at risk of combustion and explosion when mixed with O₂.

The following describes an electrode assembly, a battery cell, a battery, and an electrical device of this application with reference to drawings.

### [Electrode assembly]

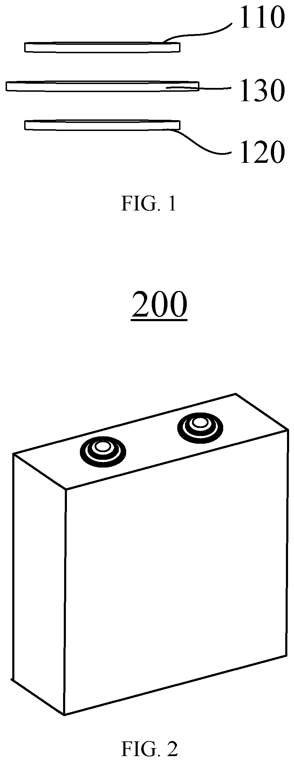

A first aspect of this application provides an electrode assembly. FIG. 1 is a schematic structural diagram of an electrode assembly according to an embodiment of this application. As shown in FIG. 1, the electrode assembly includes a positive electrode 110, a negative electrode 120, and a solid electrolyte 130 to be described in detail later. The positive electrode 110 contains a lithium supplement material capable of releasing oxygen during first-cycle charging. The solid electrolyte 130 contains a first additive. The first additive is a metal-organic framework compound with a porosity of 65% to 95%.

The applicant hereof finds that the metal-organic framework compound with a porosity of 65% to 95% added to the solid electrolyte 130 of the electrode assembly can improve the safety performance of the lithium battery while ensuring a high level of the energy density and cycle performance of the lithium battery.

With the lithium supplement material added into the positive electrode 110, the lithium supplement material with a high specific capacity and a low decomposition potential and rich in lithium metal provides sufficient active lithium for the SEI during first-cycle charging, compensates for the consumption of active lithium ions during long-term cycling of the lithium battery, and improves the cycle life and energy density of the lithium battery.

By using a solid electrolyte, it is prevented that the reducing gases such as H₂ and CO are generated by the decomposition of a conventional liquid electrolyte solution at high voltage. By adding a metal-organic framework compound with a porosity of 65% to 95% to the solid electrolyte, the crystallinity of the polymer can be reduced, the ionic conductivity of the solid electrolyte can be improved, and the oxygen generated by the lithium supplement material in the positive electrode can be absorbed promptly, thereby avoiding explosions caused by hydrogen-oxygen mixture, reducing the probability of bulging of the lithium battery, and in turn, improving the cycle performance, energy density, and safety performance of the lithium battery comprehensively.

Generally, a lithium battery includes a positive electrode, a negative electrode, an electrolyte, and a separator. In a charge-discharge cycle of the battery, active ions are shuttled between the positive electrode and the negative electrode by intercalation and deintercalation. The electrolyte serves to conduct ions between the positive electrode and the negative electrode. Disposed between the positive electrode and the negative electrode, the separator primarily serves to prevent a short circuit between the positive electrode plate and the negative electrode plate while allowing passage of ions.

It is hereby noted that the "positive electrode" and "positive electrode" referred to herein mean an entirety of a positive electrode plate and an entirety of a negative electrode plate, respectively, that each include an active material, a current collector, or other additives. In addition, the electrolyte provided in this application plays a dual role as an electrolyte and a separator.

The lithium battery referred to herein may be a lithium-ion battery or a lithium metal battery, and the type of the lithium battery is not limited herein. The following embodiments are described by using a lithium-ion battery as an example.

### [Electrolyte]

In some embodiments, the metal-organic framework compound includes a ligand structure. The ligand structure contains at least one metal ion among Mg, Mn, Fe, Co, Ni, Cu, or Zn and contains a ligand structure falling into a category of a nitrogen-containing heterocycle, a carboxylic acid, or an imidazole.

In the above technical solution, the metal-organic framework compound in the first additive includes a ligand structure, and the ligand structure not only contains at least one metal ion among Mg, Mn, Fe, Co, Ni, Cu, or Zn, but also contains a ligand structure falling into the category of a nitrogen-containing heterocycle, a carboxylic acid, or an imidazole. In this way, the first additive can physically adsorb the oxygen released by the lithium supplement material.

In some embodiments, the metal-organic framework compound includes at least one of M-MOF-74, NU-1500, ZIF-8, or NPF-200.

In the above technical solution, the metal-organic framework compound is at least one of M-MOF-74, NU-1500, ZIF-8, or NPF-200. In this way, the first additive can promptly absorb the oxygen released by the lithium supplement material.

In some embodiments, the M is at least one of Mg, Co, Ni, Cu, or Zn; and optionally, the M in the M-MOF-74 is at least one of Mn or Fe.

In the above technical solution, the M is at least one of Mg, Co, Ni, Cu, or Zn, so that the M-MOF-74 possesses the physical properties of a high specific surface area and a high porosity. By virtue of such physical properties, the M-MOF-74 can promptly and quickly adsorb oxygen, thereby improving the safety performance of the lithium battery. Further, when the M in the M-MOF-74 is at least one of Mn or Fe, the M-MOF-74 possesses the physical properties of a high specific surface area and a high porosity on the one hand; and on the other hand, the framework structure of the M-MOF-74 contains dense and coordinatively unsaturated metal vacancies available for bonding with oxygen to form chemical bonds through charge transfer, thereby undergoing irreversible chemical adsorption. The combination of the physical adsorption and the chemical adsorption can increase the amount of oxygen adsorption, thereby further improving the performance of the lithium battery.

In some embodiments, the NU in the NU-1500 includes at least one of Fe, Gr, or Sc.

In the above technical solution, when the NU in the NU-1500 includes at least one of Fe, Gr, or Sc, the oxygen released by the lithium supplement material can be well absorbed by physical adsorption, thereby improving the safety performance of the lithium battery.

In some embodiments, a particle diameter of the first additive is 20 nm to 5 µm, and optionally 50 nm to 2 µm.

In the above technical solution, by keeping the porosity of the first additive within the range of 20 nm to 5 µm, especially 50 nm to 2 µm, it is prevented that the M-MOF-74 particles are agglomerated due to a large particle diameter and thereby result in a low effect of adsorbing oxygen, so as to further improve the effect of the solid electrolyte 130 in adsorbing oxygen.

In some embodiments, the porosity of the first additive is 85% to 95%.

In the above technical solution, the higher the porosity, the faster the speed of oxygen absorption. By making the M-MOF-74 possess a relatively high porosity, that is, within the range of 65% to 95%, especially 85% to 95%, it is ensured that the oxygen released by the delithiated lithium supplement material can be quickly adsorbed, thereby avoiding the hazards of explosion caused by hydrogen-oxygen mixture.

In some embodiments, the solid electrolyte 130 further includes a second additive. The second additive includes at least one selected from a polyolefin polymer, a polynitrile polymer, or a polycarboxylate ester polymer.

In the above technical solution, because the positive electrode 110 contains a lithium supplement material and the lithium supplement material is delithiated only at a relatively high voltage, the electrolyte needs to match a high-voltage positive electrode system. With the second additive added into the solid electrolyte 130, and with the second additive containing at least one selected from a polyolefin polymer, a polynitrile polymer, or a polycarboxylate ester polymer, the solid electrolyte can match a high-voltage positive electrode system to increase the energy density of the lithium battery.

In some embodiments, the solid electrolyte 130 further includes a lithium salt. The lithium salt includes at least one selected from LiPF₆, LiBF₄, LiTFSI, LiClO₄, LiAsF₆, LiBOB, LiDFOB, LiTFOP, LiN(SO₂RF)₂, or LiN(SO₂F)(SO₂RF), in which the substituent RF is CₙF₂ₙ₊₁, and n is an integer ranging from 1 to 10.

By making the lithium salt include at least one of the above materials and then adding the lithium salt into the solid electrolyte 130, the above technical solution can well assist in dissociating lithium ions so as to release a large number of active lithium ions.

It is hereby noted that the solid electrolyte 130 may include only the first additive, the second additive, and the lithium salt. In other words, the second additive is a matrix, in which the M-MOF-74 and the lithium salt are added to form a solid electrolyte. Other additives may be further added as needed, and are not limited herein.

In some embodiments, the thickness of the solid electrolyte 130 is 10 to 100 µm, and optionally 20 to 40 µm.

In the above technical solution, the solid electrolyte 130 plays a dual role as a separator and an electrolyte. If the thickness of the solid electrolyte 130 is excessively small, the mechanical strength of the solid electrolyte 130 is relatively low. During the charge and discharge of the lithium-ion battery, the dendrites generated by the lithium-ion battery may pierce the solid electrolyte 130 and cause a short circuit in the battery. If the thickness of the solid electrolyte 130 is excessively thick, the solid electrolyte hinders the migration of lithium ions and intensifies the polarization of the lithium-ion battery. By keeping the thickness of the solid electrolyte 130 at 0 to 100 µm, especially 20 to 40 µm, on the one hand, sufficient mechanical strength of the solid electrolyte 130 is ensured, and short circuits of the battery caused by dendrites piercing the solid electrolyte 130 are avoided. On the other hand, the normal migration of lithium ions and normal polarization of lithium ions are maintained.

In some embodiments, the ionic conductivity of the solid electrolyte 130 at a room temperature is 10⁻⁷ to 10⁻² S/cm, and optionally 10⁻⁴ to 10⁻³ S/cm.

In the above technical solution, if the ionic conductivity of the solid electrolyte 130 is excessively low, the electrical conductivity of the solid electrolyte is very low. By keeping the ionic conductivity of the solid electrolyte 130 at a room temperature within a range of 10⁻⁷ to 10⁻² S/cm, and especially 10⁻⁴ to 10⁻³ S/cm, this embodiment of this application ensures fast movement of positive and negative ions in the lithium-ion battery.

In some embodiments, the chemical stability window of the solid electrolyte 130 is 4.9 to 5.3 V.

In the above technical solution, the lithium supplement material is delithiated only at a relatively high voltage, so as to increase the content of lithium in the positive active material of the positive electrode 110 and compensate for the capacity loss caused by a low first-cycle Coulombic efficiency. By keeping the chemical stability window of the solid electrolyte 130 within the range of 4.9 to 5.3 V, this embodiment of this application matches the solid electrolyte 130 with the high-voltage positive electrode 110, so as to increase the energy density of the battery.

### [Positive electrode]

The positive electrode generally includes a positive current collector and a positive film layer disposed on at least one surface of the positive current collector. The positive film layer includes a positive active material and a positive electrode lithium supplement material.

In some embodiments, the lithium supplement material includes at least one selected from LiₓM₁O_{0.5(2+x)}, Li₂M₂O₃, Li₂M₃O₄, Li₃M₄O₄, Li₅M₅O₄, or Li₅M₆O₆, where M₁ includes at least one selected from Ni, Co, Fe, Mn, Zn, Mg, Ca, Cu, or Sn; M₂ includes at least one selected from Ni, Co, Fe, Mn, Sn, or Cr; M₃ includes at least one selected from Ni, Co, Fe, Mn, Sn, Cr, V, or Nb; M₄ includes at least one selected from Ni, Co, Fe, Mn, Sn, Cr, V, Mo, or Nb; M₅ includes at least one selected from Ni, Co, Fe, Mn, Sn, Cr, or Mo; M₆ includes at least one selected from Ni, Co, or Mn; and a valence of each element of M₁, M₂, M₃, M₄, M₅, and M₆ is lower than a highest oxidation state of the element.

By making the lithium supplement material include at least one of LiₓM₁O_{0.5(2+x)}, Li₂M₂O₃, Li₂M₃O₄, Li₃M₄O₄, Li₅M₅O₄, or Li₅M₆O₆, the above technical solution increases the lithium content in the positive active material of the positive electrode 110, thereby increasing the reversible capacity and energy density of the lithium-ion battery.

In some embodiments, the lithium supplement material includes at least one selected from Li₂MnO₂, Li₅FeO₄, Li₆CoO₄, Li₂NiO₂, Li₂Cuₓ₁Ni_{1-x1-y1}M_{y1}O₂, Li₃VO₄, or Li₃NbO₄, in which M is at least one selected from Zn, Sn, Mg, Fe, or Mn, 0 ≤ x1 ≤ 1, 0 ≤ y1 < 0.1, and optionally 0.2 ≤ x1 ≤ 0.8, and further optionally 0.4 ≤ x1 ≤ 0.6.

By making the lithium supplement material include at least one of Li₂MnO₂, Li₅FeO₄, Li₆CoO₄, Li₂NiO₂, Li₂Cuₓ₁Ni_{1-x1-y1}M_{y1}O₂, Li₃VO₄, or Li₃NbO₄, in which 0 ≤ x1 ≤ 1, 0 ≤ y1 < 0.1, and optionally 0.2 ≤ x1 ≤ 0.8, and further optionally 0.4 ≤ x1 ≤ 0.6, the above technical solution increases the lithium content in the positive active material of the positive electrode 110, thereby increasing the reversible capacity and energy density of the lithium-ion battery.

In some embodiments, the average particle diameter of the lithium supplement material is 2 to 50 µm, and optionally 2 to 10 µm.

In the above technical solution, when the particle diameter of the lithium supplement material is excessively small, the slurry is prone to agglomerate and condense, and the slurry is more viscous and contains a lower solid content. If the particle diameter is excessively large, the polarization of the lithium ions in the lithium supplement material is intensified during deintercalation reactions, thereby lowering the lithium supplementation efficiency. By keeping the average particle diameter of the lithium supplement material within a range of 2 to 50 µm, and optionally 2 to 10 µm, the positive electrode slurry can be prevented from condensing and becoming more viscous, and the lithium supplementation efficiency can be improved.

In some embodiments, considering a total mass percent of the positive electrode 110 as 100 wt%, a mass percent of the lithium supplement material is 0.1 wt% to 10 wt%, and optionally 2 wt% to 7 wt%.

In the above technical solution, if the content of the lithium supplement material in the positive electrode 110 is excessively low, the lithium supplement material is insufficient to compensate for the loss of active lithium in the positive electrode 110; if the content of the lithium supplement material is excessively high, the reversible lithiation vacancies in the positive electrode 110 will be insufficient, thereby impairing the energy density of the lithium-ion battery. By keeping the mass percent of the lithium supplement material in the positive electrode 110 within a range of 0.1 wt% to 10 wt%, especially 2 wt% to 7 wt%, this technical solution can compensate for the loss of active lithium in the positive electrode 110 and ensure a high energy density of the lithium-ion battery.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

In some embodiments, the positive electrode, the negative electrode, and the solid electrolyte may be made into an electrode assembly by winding or stacking.

In some embodiments, the battery cell may include an outer package. The outer package may be configured to package the electrode assembly and the electrolyte.

In some embodiments, the outer package of the battery cell may be a hard shell such as a hard plastic shell, an aluminum shell, a steel shell, or the like. Alternatively, the outer package of the battery cell may be a soft package such as a pouch-type soft package. The soft package may be made of plastic such as polypropylene, polybutylene terephthalate, or polybutylene succinate.

The shape of the battery cell is not particularly limited herein, and may be cylindrical, prismatic or in any other shape. For example, FIG. 2 shows a prismatic battery cell 200 as an example.

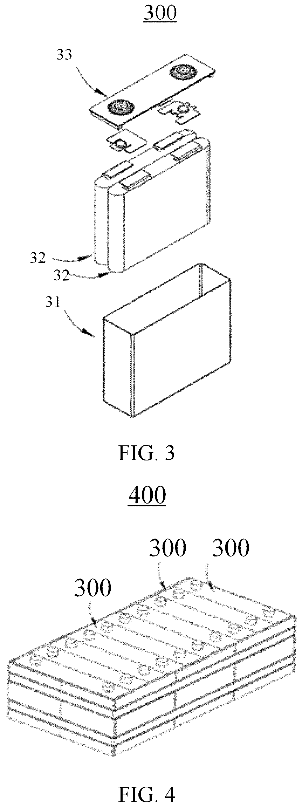

In some embodiments, referring to FIG. 3, the outer package may include a housing 31 and a cover plate 33. The housing 31 may include a bottom plate and a side plate connected to the bottom plate. The bottom plate and the side plate close in to form an accommodation cavity. An opening that communicates with the accommodation cavity is created on the housing 31. The cover plate 33 can fit and cover the opening to close the accommodation cavity. The positive electrode, the negative electrode, and the solid electrolyte may be made into an electrode assembly 32 by winding or stacking. The electrode assembly 32 is packaged in the accommodation cavity. The number of electrode assemblies 32 in a lithium-ion battery 300 may be one or more, and may be selected by a person skilled in the art as actually required.

In some embodiments, the battery cell may be assembled into a battery module. The battery module may include one or more battery cells, and the specific number of battery cells in a battery module may be selected by a person skilled in the art depending on the application scenario and capacity of the battery module.

FIG. 4 shows a battery module 400 as an example. Referring to FIG. 4, in the battery module 400, a plurality of battery cells 300 may be arranged sequentially along a length direction of the battery module 400. Alternatively, the secondary batteries may be arranged in any other manner. Further, the plurality of battery cells 300 may be fixed by a fastener.

Optionally, the battery module 400 may further include a shell that provides an accommodation space. The plurality of battery cells 300 are accommodated in the accommodation space.

In some embodiments, the battery module may be assembled to form a battery. The battery may include one or more battery modules, and the specific number of battery modules in a battery may be selected by a person skilled in the art depending on practical applications and capacity of the battery.

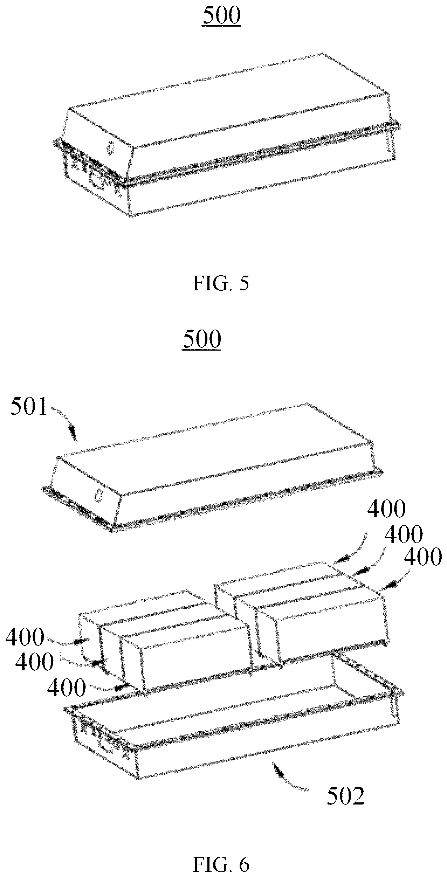

FIG. 5 and FIG. 6 show a battery 500 as an example. Referring to FIG. 5 and FIG. 6, the battery 500 may include a battery box and a plurality of battery modules 400 disposed in the battery box. The battery box includes an upper box 501 and a lower box 502. The upper box 501 fits the lower box 502 to form a closed space for accommodating the battery modules 400. The plurality of battery modules 400 may be arranged in the battery box in any manner.

Further, this application further provides an electrical device. The electrical device includes at least one of the electrode assembly, the battery cell, or the battery disclosed in this application. The electrode assembly, the battery cell, or the battery may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The electrode assembly, the battery cell, or the battery may be selected for the electrical device as required by the electrical device.

The electrical device may be a battery electric vehicle, a hybrid electric vehicle, a plug-in hybrid electric vehicle, or the like. The electrical device may employ a battery or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

1) Method for preparing Fe-MOF-74: Weighing out 5 mmol of FeCl₂, 2 mmol of 2,5-dihydroxyterephthalic acid, 5 mL of DMF, and 6 mL of methanol in a high-purity argon glovebox, adding the constituents together into a 100 mL three-necked flask, sealing the flask, and then transferring the flask out of the glovebox. Heating the flask under the protection of flowing argon (with a flow rate of 20 mL/min), and stirring and reacting the constituents for 18 hours; transferring the flask into the glovebox upon completion of the reaction, cooling the reaction product slowly at a room temperature, washing the reaction product with DMF and methanol for several times, and then drying the washed product to obtain a reddish-brown specimen, that is, Fe-MOF-74.
2) Method for preparing an all-solid electrolyte: First, dispersing 2.1 gram of Fe-MOF-74 into 30 mL of DMF, and performing ultrasonication for 20 min to form a uniformly dispersed solution. Dissolving 14.25 grams of PVDF-HFP and 4.8 grams of LiPF₆ in 30 mL of DMF to form a polymer-salt mixed solution, and then adding the above Fe-MOF-74 dispersion solution into the polymer-salt mixed solution, and stirring the mixture in an oil bath at 70 °C for 12 hours to obtain a polymer electrolyte slurry. Using an applicator to scrape and apply the slurry onto a polytetrafluoroethylene sheet, and drying the slurry in a 100 °C vacuum for 24 hours to remove the DMF solvent, thereby obtaining a 25 µm-thick solid electrolyte film.
3) Preparing a lithium-ion battery
   3.1) Preparing a positive electrode: Dissolving LiFePO₄ (LFP), Li₅FeO₄, acetylene black as a conductive agent, and a binder at a mass ratio of 94%: 2%: 1%: 2% in an N-methylpyrrolidone (NMP) solvent, and stirring the mixture well to form a positive electrode slurry. Applying the positive electrode slurry onto a positive current collector aluminum foil evenly, and then performing drying, cold-pressing, and slitting to obtain a positive electrode plate. The volume median diameter of the LFP particles is 1.2 µm.
   3.2) Preparing a negative electrode: Mixing well artificial graphite as an active material, acetylene black as a conductive agent, styrene-butadiene rubber (SBR) as a binder, sodium carboxymethyl cellulose (CMC) as a thickener in an appropriate amount of deionized water solvent system at a mass ratio of 96.5%: 0.7%: 1.8%: 1% to obtain a slurry. Coating a copper foil with the slurry, and performing drying and cold-pressing to obtain a negative electrode plate.
   3.3) Preparing a separator: Using a 25 µm-thick all-solid electrolyte film as a separator.
   3.4) Electrolyte: Using a 25 µm-thick all-solid electrolyte as an electrolyte.
   3.5) Assembling; Stacking the positive electrode plate, the all-solid electrolyte, and the negative electrode plate sequentially, placing the electrolyte film between the positive electrode and the negative electrode to serve a function of separation, and winding the stacked structure to obtain an electrode assembly. Subsequently, hot-pressing the electrode assembly at 100 °C at a pressure of 250 MPa for 2 min to obtain an all-solid lithium-ion battery.

### Embodiments 2 to 4

The preparation steps of the lithium-ion batteries in Embodiments 2 to 4 are identical to those in Embodiment 1 except the porosity of the Fe-MOF-74.

### Embodiment 5

The preparation steps of the lithium-ion batteries in Embodiment 5 are identical to those in Embodiment 1 except that the thickness of the all-solid electrolyte in steps (3.4) and (3.5) is 10 µm.

### Embodiment 6

The preparation steps of the lithium-ion batteries in Embodiment 6 are identical to those in Embodiment 1 except that the thickness of the all-solid electrolyte in steps (3.4) and (3.5) is 55 µm.

### Embodiment 7

The preparation steps of the lithium-ion batteries in Embodiment 7 are identical to those in Embodiment 1 except that the LiFePO₄ (LFP) in step (3.1) is replaced by LiCoO₂.

### Embodiment 8

The preparation steps of the lithium-ion batteries in Embodiment 8 are identical to those in Embodiment 1 except that the Li₅FeO₄ in step (3.1) is replaced by Li₆CoO₄.

### Embodiment 9

The preparation steps of the lithium-ion batteries in Embodiment 9 are identical to those in Embodiment 1 except that the Li₅FeO₄ in step (3.1) is replaced by Li₂O₂.

### Embodiment 10

The preparation steps of the lithium-ion batteries in Embodiment 10 are identical to those in Embodiment 1 except that the PVDF-HFP is replaced by PVCA when preparing the all-solid electrolyte in steps (3.4) and (3.5).

### Embodiment 11

The preparation steps of the lithium-ion batteries in Embodiment 11 are identical to those in Embodiment 1 except that the PVDF-HFP is replaced by PAN when preparing the all-solid electrolyte in steps (3.4) and (3.5).

### Embodiment 12

The preparation steps of the lithium-ion batteries in Embodiment 12 are identical to those in Embodiment 1 except that the Fe-MOF-74 is replaced by Mn-MOF-74 when preparing the all-solid electrolyte in steps (3.4) and (3.5). Specifically, the preparation method of Mn-MOF-74 is substantially the same as that of Fe-MOF-74 except that the feedstock of Mn-MOF-74 is 5 mmol of MnCl₂, 2 mmol of 2,5-dihydroxyterephthalic acid, 5 mL of DMF, and 6 mL of methanol.

### Embodiment 13

The preparation steps of the lithium-ion battery in Embodiment 13 are identical to those in Embodiment 1 except that the Fe-MOF-74 is replaced by Co-MOF-74 when preparing the all-solid electrolyte in steps (3.4) and (3.5). Specifically, the preparation method of Co-MOF-74 is substantially the same as that of Fe-MOF-74 except that the feedstock of Co-MOF-74 is 5 mmol of Co(NO₃)₂·H₂O, 2 mmol of 2,5-dihydroxyterephthalic acid, 5 mL of DMF, and 6 mL of methanol.

### Embodiment 14

The preparation steps of the lithium-ion batteries in Embodiment 14 are identical to those in Embodiment 1 except that the Fe-MOF-74 is replaced by NU-1500 when preparing the all-solid electrolyte in steps (3.4) and (3.5). The preparation technique of the NU-1500 is relatively mature, and is not described in detail herein.

### Embodiment 15

The preparation steps of the lithium-ion batteries in Embodiment 15 are identical to those in Embodiment 1 except that the Fe-MOF-74 is replaced by ZIF-8 when preparing the all-solid electrolyte in steps (3.4) and (3.5). The preparation technique of the ZIF-8 is relatively mature, and is not described in detail herein.

### Embodiment 16

The preparation steps of the lithium-ion battery in Embodiment 16 are identical to those in Embodiment 1 except that the Fe-MOF-74 is replaced by ZPF-200 when preparing the all-solid electrolyte in steps (3.4) and (3.5). The preparation technique of the ZPF-200 is relatively mature, and is not described in detail herein.

### Comparative Embodiment 1

The preparation steps of the lithium-ion battery in Comparative Embodiment 1 are identical to those in Embodiment 1 except that the separator in step (3.3) is a 12 µm-thick PE/PP porous polymer film; the electrolyte in step (3.4) is a liquid electrolyte solution formed by mixing ethylene carbonate (EC) and diethyl carbonate (DEC) at a mass ratio of 50%: 50% and dissolving 1.1 mol/L LiPF₆ lithium salt in the mixture; and the assembling operations in step (3.5) are: stacking the positive electrode plate, the separator, and the negative electrode plate sequentially, placing the separator between the positive electrode and the negative electrode to serve a function of separation, and winding the stacked structure to obtain an electrode assembly. Putting the electrode assembly into an outer package, injecting a prepared base electrolyte solution, and sealing the package.

### Comparative Embodiment 2

The preparation steps of the lithium-ion battery in Comparative Embodiment 2 are identical to those in Embodiment 1 except that the electrolyte slurry contains no Fe-MOF-74 when preparing the all-solid electrolytes in steps (3.4) and (3.5).

### Comparative Embodiment 3

The preparation steps of the lithium-ion battery in Comparative Embodiment 3 are identical to those in Embodiment 1 except that the Fe-MOF-74 in the electrolyte slurry is replaced by Al₂O₃ when preparing the all-solid electrolyte in steps (3.4) and (3.5).

### Comparative Embodiment 4

The preparation steps of the lithium-ion battery in Comparative Embodiment 4 are identical to those in Comparative Embodiment 3 except that the porosity of the all-solid electrolyte is 60%.

### Comparative Embodiment 5

The preparation steps of the lithium-ion battery in Comparative Embodiment 5 are identical to those in Comparative Embodiment 3 except that the porosity of the all-solid electrolyte is 98%.

### Performance metrics of lithium-ion battery

The performance of the batteries prepared in Embodiments 1 to 16 and Comparative Embodiments 1 to 5 is tested by using the following techniques.

### 1. Specific charge capacity and specific discharge capacity

Charging a battery at a constant-current rate of 0.33C at a normal temperature (25 °C) until the voltage reaches a cut-off voltage, and then charging the battery at a constant voltage until the current drops to 0.05C; measuring the charge capacity as Ec0, and dividing Ec0 by the mass of the positive active material of the battery to obtain a specific charge capacity. The calculation formula is: specific charge capacity (mAh/g) = 1^{st}-cycle charge capacity/mass of the positive active material. Discharging the above charged battery at a constant-current rate of 0.33C until the voltage reaches a cut-off voltage, and measuring the discharge capacity as Ed0. Dividing Ed0 by the mass of the positive active material of the battery to obtain a specific discharge capacity. The calculation formula is: specific discharge capacity (mAh/g) = 1^{st}-cycle discharge capacity/mass of the positive active material. Repeating the above process of testing the specific charge capacity and the above process of testing the specific discharge capacity 5 times each, and averaging out the resulting values to obtain the specific charge capacity and the specific discharge capacity listed in Table 1 below.

**Table 1 Performance test results of specific charge capacity and specific discharge capacity in Embodiments 1 to 16 and Comparative Embodiments 1 to 5 (To be continued)**

| Group | Positive active material | Type of lithium supplement additive | Mass percent W₁ of lithium supplement additive | Type of polymer | Type of first additive |
|---|---|---|---|---|---|
| Embodiment 1 | LFP | Li₅FeO₄ | 2% | PVDF-HFP | Fe-MOF-74 |
| Embodiment 2 | LFP | Li₅FeO₄ | 2% | PVDF-HFP | Fe-MOF-74 |
| Embodiment 3 | LFP | Li₅FeO₄ | 2% | PVDF-HFP | Fe-MOF-74 |
| Embodiment 4 | LFP | Li₅FeO₄ | 2% | PVDF-HFP | Fe-MOF-74 |
| Embodiment 5 | LFP | Li₅FeO₄ | 2% | PVDF-HFP | Fe-MOF-74 |
| Embodiment 6 | LFP | Li₅FeO₄ | 2% | PVDF-HFP | Fe-MOF-74 |
| Embodiment 7 | LiCoO₂ | Li₅FeO₄ | 2% | PVDF-HFP | Fe-MOF-74 |
| Embodiment 8 | LFP | Li₆CoO₄ | 2% | PVDF-HFP | Fe-MOF-74 |
| Embodiment 9 | LFP | Li₂O₂ | 2% | PVDF-HFP | Fe-MOF-74 |
| Embodiment 10 | LFP | Li₅FeO₄ | 2% | PVCA | Fe-MOF-74 |
| Embodiment 11 | LFP | Li₅FeO₄ | 2% | PAN | Fe-MOF-74 |
| Embodiment 12 | LFP | Li₅FeO₄ | 2% | PVDF-HFP | Mn-MOF-74 |
| Embodiment 13 | LFP | Li₅FeO₄ | 2% | PVDF-HFP | Co-MOF-74 |
| Embodiment 14 | LFP | Li₅FeO₄ | 2% | PVDF-HFP | NU-1500 |
| Embodiment 15 | LFP | Li₅FeO₄ | 2% | PVDF-HFP | ZIF-8 |
| Embodiment 16 | LFP | Li₅FeO₄ | 2% | PVDF-HFP | NPF-200 |
| Comparative Embodiment 1 | LFP | Li₅FeO₄ | 2% | / | / |
| Comparative Embodiment 2 | LFP | Li₅FeO₄ | 2% | PVDF-HFP | / |
| Comparative Embodiment 3 | LFP | Li₅FeO₄ | 2% | PVDF-HFP | Al₂O₃ |
| Comparative Embodiment 4 | LFP | Li₅FeO₄ | 2% | PVDF-HFP | Fe-MOF-74 |
| Comparative Embodiment 5 | LFP | Li₅FeO₄ | 2% | PVDF-HFP | Fe-MOF-74 |

**Table 1 Performance test results of specific charge capacity and specific discharge capacity in Embodiments 1 to 16 and Comparative Embodiments 1 to 5 (Continued)**

| Group | Porosity P₁ of first additive | Mass percent W₂ of first additive | Type of electrolyte | Thickness of solid electrolyte (µm) | Specific charge capacity (mAh/g) | Specific discharge capacity (mAh/g) |
|---|---|---|---|---|---|---|
| Embodiment 1 | 95% | 10% | All-solid | 25 | 180 | 152 |
| Embodiment 2 | 65% | 10% | All-solid | 25 | 166 | 142 |
| Embodiment 3 | 75% | 10% | All-solid | 25 | 169 | 144 |
| Embodiment 4 | 85% | 10% | All-solid | 25 | 175 | 149 |
| Embodiment 5 | 95% | 10% | All-solid | 10 | 165 | 144 |
| Embodiment 6 | 95% | 10% | All-solid | 55 | 162 | 141 |
| Embodiment 7 | 95% | 10% | All-solid | 25 | 176 | 150 |
| Embodiment 8 | 95% | 10% | All-solid | 25 | 178 | 150 |
| Embodiment 9 | 95% | 10% | All-solid | 25 | 174 | 152 |
| Embodiment 10 | 95% | 10% | All-solid | 25 | 168 | 148 |
| Embodiment 11 | 95% | 10% | All-solid | 25 | 170 | 146 |
| Embodiment 12 | 95% | 10% | All-solid | 25 | 164 | 143 |
| Embodiment 13 | 95% | 10% | All-solid | 25 | 174 | 144 |
| Embodiment 14 | 95% | 10% | All-solid | 25 | 182 | 153 |
| Embodiment 15 | 95% | 10% | All-solid | 25 | 176 | 145 |
| Embodiment 16 | 95% | 10% | All-solid | 25 | 179 | 148 |
| Comparative Embodiment 1 | / | / | 1.1 mol/L LiPF₆ | / | 145 | 134 |
| Comparative Embodiment 2 | / | / | All-solid | 25 | 156 | 143 |
| Comparative Embodiment 3 | / | 10% | All-solid | 25 | 158 | 142 |
| Comparative Embodiment 4 | 60% | 10% | All-solid | 25 | 154 | 138 |
| Comparative Embodiment 5 | 98% | 10% | All-solid | 25 | 182 | 150 |

The above specific charge capacity comparison shows that when the all-solid electrolyte doped with M-MOF, NU-1500, ZIF-8, or ZPF-200 is used as an electrolyte of a lithium-ion battery, the specific charge capacity and the specific discharge capacity of the lithium-ion battery are increased significantly, indicating that the M-MOF, NU-1500, ZIF-8, and ZPF-200 can increase the energy density of the lithium-ion battery. In addition, when the porosity of the all-solid electrolyte is higher, the energy density of the lithium-ion battery is more increased.

### 2. Testing high-temperature storage performance of the battery

Taking five batteries in each embodiment for parallel test. Charging each battery at a 1C rate at a normal temperature until the voltage reaches 3.65 V, and then discharging the battery at a 1C rate until the voltage drops to 2.5 V. Measuring the reversible capacity as E₀. Storing the fully charged battery in a 60 °C oven for 100 days, taking out the battery, and promptly measuring the reversible capacity of the battery, denoted as Eₙ. Using the following formula to calculate the capacity retention rate ε of the battery after 100 days of storage at 60 °C. The calculation results are set out in Table 2 below, where ε = (Eₙ - E₀)/E₀ × 100%.

**Table 2 Capacity retention rate after 100 days of storage of batteries in Embodiments 1 to 16 and Comparative Embodiments 1 to 5 (To be continued)**

| Group | Positive active material | Type of lithium supplement additive | Mass percent of lithium supplement additive W1 | Type of polymer | Type of first additive |
|---|---|---|---|---|---|
| Embodiment 1 | LFP | Li₅FeO₄ | 2% | PVDF-HFP | Fe-MOF-74 |
| Embodiment 2 | LFP | Li₅FeO₄ | 2% | PVDF-HFP | Fe-MOF-74 |
| Embodiment 3 | LFP | Li₅FeO₄ | 2% | PVDF-HFP | Fe-MOF-74 |
| Embodiment 4 | LFP | Li₅FeO₄ | 2% | PVDF-HFP | Fe-MOF-74 |
| Embodiment 5 | LFP | Li₅FeO₄ | 2% | PVDF-HFP | Fe-MOF-74 |
| Embodiment 6 | LFP | Li₅FeO₄ | 2% | PVDF-HFP | Fe-MOF-74 |
| Embodiment 7 | LiCoO₂ | Li₅FeO₄ | 2% | PVDF-HFP | Fe-MOF-74 |
| Embodiment 8 | LFP | Li₆CoO₄ | 2% | PVDF-HFP | Fe-MOF-74 |
| Embodiment 9 | LFP | Li₂O₂ | 2% | PVDF-HFP | Fe-MOF-74 |
| Embodiment 10 | LFP | Li₅FeO₄ | 2% | PVCA | Fe-MOF-74 |
| Embodiment 11 | LFP | Li₅FeO₄ | 2% | PAN | Fe-MOF-74 |
| Embodiment 12 | LFP | Li₅FeO₄ | 2% | PVDF-HFP | Mn-MOF-74 |
| Embodiment 13 | LFP | Li₅FeO₄ | 2% | PVDF-HFP | Co-MOF-74 |
| Embodiment 14 | LFP | Li₅FeO₄ | 2% | PVDF-HFP | NU-1500 |
| Embodiment 15 | LFP | Li₅FeO₄ | 2% | PVDF-HFP | ZIF-8 |
| Embodiment 16 | LFP | Li₅FeO₄ | 2% | PVDF-HFP | NPF-200 |
| Comparative Embodiment 1 | LFP | Li₅FeO₄ | 2% | / | / |
| Comparative Embodiment 2 | LFP | Li₅FeO₄ | 2% | PVDF-HFP | / |
| Comparative Embodiment 3 | LFP | Li₅FeO₄ | 2% | PVDF-HFP | Al₂O₃ |
| Comparative Embodiment 4 | LFP | Li₅FeO₄ | 2% | PVDF-HFP | Fe-MOF-74 |
| Comparative Embodiment 5 | LFP | Li₅FeO₄ | 2% | PVDF-HFP | Fe-MOF-74 |

**Table 2 Capacity retention rate after 100 days of storage of batteries in Embodiments 1 to 16 and Comparative Embodiments 1 to 5 (Continued)**

| Group | Porosity P₁ of first additive | Mass percent W₂ of first additive | Type of electrolyte | Thickness of solid electrolyte (µm) | Capacity retention rate after 100-day storage at 60 °C |
|---|---|---|---|---|---|
| Embodiment 1 | 95% | 10% | All-solid | 25 | 97.80% |
| Embodiment 2 | 65% | 10% | All-solid | 25 | 95.20% |
| Embodiment 3 | 75% | 10% | All-solid | 25 | 95.80% |
| Embodiment 4 | 85% | 10% | All-solid | 25 | 97.10% |
| Embodiment 5 | 95% | 10% | All-solid | 10 | 95.50% |
| Embodiment 6 | 95% | 10% | All-solid | 55 | 92.30% |
| Embodiment 7 | 95% | 10% | All-solid | 25 | 97.60% |
| Embodiment 8 | 95% | 10% | All-solid | 25 | 97.30% |
| Embodiment 9 | 95% | 10% | All-solid | 25 | 97.50% |
| Embodiment 10 | 95% | 10% | All-solid | 25 | 96.40% |
| Embodiment 11 | 95% | 10% | All-solid | 25 | 96.50% |
| Embodiment 12 | 95% | 10% | All-solid | 25 | 95.30% |
| Embodiment 13 | 95% | 10% | All-solid | 25 | 97.70% |
| Embodiment 14 | 95% | 10% | All-solid | 25 | 98.00% |
| Embodiment 15 | 95% | 10% | All-solid | 25 | 96.50% |
| Embodiment 16 | 95% | 10% | All-solid | 25 | 97.80% |
| Comparative Embodiment 1 | / | / | 1.1 mol/L LiPF₆ | / | 87.10% |
| Comparative Embodiment 2 | / | / | All-solid | 25 | 92.40% |
| Comparative Embodiment 3 | / | 10% | All-solid | 25 | 92.80% |
| Comparative Embodiment 4 | 60% | 10% | All-solid | 25 | 94.80% |
| Comparative Embodiment 5 | 98% | 10% | All-solid | 25 | 97.50% |

The above storage performance test comparison of lithium-ion batteries shows that when the all-solid electrolyte doped with M-MOF, NU-1500, ZIF-8, or ZPF-200 is used as an electrolyte of a lithium-ion battery, the reversible capacity of the lithium-ion battery is increased significantly, indicating that the M-MOF, NU-1500, ZIF-8, and ZPF-200 can increase the reversible capacity of the lithium-ion battery. In addition, when the porosity of the all-solid electrolyte is higher, the reversible capacity of the lithium-ion battery is maintained more stably.

### 3. Testing the oxygen content and thickness of a battery

Taking five batteries from each embodiment for parallel test. Using a gas measurement instrument to measure the oxygen content of each battery when the battery is charged at a 1C rate until a voltage of 3.65 V. Using a vernier caliper to measure the thickness d₁ of each battery in an initial state and the thickness d₂ of the battery in a final state after 100 cycles, where, in each cycle, the battery is charged at a 1C rate until a voltage of 3.65 V and then discharged at a 1C rate until a voltage of 2.5 V, so as to determine the degree of bulging of the battery. Calculating the increment of the thickness of the battery after 100 cycles according to the following formula: d = d₂ - d₁. Averaging out the calculation results of the 5 batteries in each embodiment and comparative embodiment. The results are set out in Table 3 below.

**Table 3 Test results of oxygen content and thickness of batteries in Embodiments 1 to 16 and Comparative Embodiments 1 to 5 (To be continued)**

| Group | Positive active material | Type of lithium supplement additive | Mass percent W₁ of lithium supplement additive | Type of polymer | Type of first additive |
|---|---|---|---|---|---|
| Embodiment 1 | LFP | Li₅FeO₄ | 2% | PVDF-HFP | Fe-MOF-74 |
| Embodiment 2 | LFP | Li₅FeO₄ | 2% | PVDF-HFP | Fe-MOF-74 |
| Embodiment 3 | LFP | Li₅FeO₄ | 2% | PVDF-HFP | Fe-MOF-74 |
| Embodiment 4 | LFP | Li₅FeO₄ | 2% | PVDF-HFP | Fe-MOF-74 |
| Embodiment 5 | LFP | Li₅FeO₄ | 2% | PVDF-HFP | Fe-MOF-74 |
| Embodiment 6 | LFP | Li₅FeO₄ | 2% | PVDF-HFP | Fe-MOF-74 |
| Embodiment 7 | LiCoO₂ | Li₅FeO₄ | 2% | PVDF-HFP | Fe-MOF-74 |
| Embodiment 8 | LFP | Li₆CoO₄ | 2% | PVDF-HFP | Fe-MOF-74 |
| Embodiment 9 | LFP | Li₂O₂ | 2% | PVDF-HFP | Fe-MOF-74 |
| Embodiment 10 | LFP | Li₅FeO₄ | 2% | PVCA | Fe-MOF-74 |
| Embodiment 11 | LFP | Li₅FeO₄ | 2% | PAN | Fe-MOF-74 |
| Embodiment 12 | LFP | Li₅FeO₄ | 2% | PVDF-HFP | Mn-MOF-74 |
| Embodiment 13 | LFP | Li₅FeO₄ | 2% | PVDF-HFP | Co-MOF-74 |
| Embodiment 14 | LFP | Li₅FeO₄ | 2% | PVDF-HFP | NU-1500 |
| Embodiment 15 | LFP | Li₅FeO₄ | 2% | PVDF-HFP | ZIF-8 |
| Embodiment 16 | LFP | Li₅FeO₄ | 2% | PVDF-HFP | NPF-200 |
| Comparative Embodiment 1 | LFP | Li₅FeO₄ | 2% | / | / |
| Comparative Embodiment 2 | LFP | Li₅FeO₄ | 2% | PVDF-HFP | / |
| Comparative Embodiment 3 | LFP | Li₅FeO₄ | 2% | PVDF-HFP | Al₂O₃ |
| Comparative Embodiment 4 | LFP | Li₅FeO₄ | 2% | PVDF-HFP | Fe-MOF-74 |
| Comparative Embodiment 5 | LFP | Li₅FeO₄ | 2% | PVDF-HFP | Fe-MOF-74 |

**Table 3 Test results of oxygen content and thickness of batteries in Embodiments 1 to 16 and Comparative Embodiments 1 to 5 (Continued)**

| Group | Porosity P₁ of first additive | Mass percent W₂ of first additive | Type of electrolyte | Thickness of solid electrolyte (µm) | Oxygen content of battery after first-cycle charging (%) | Increment of thickness of battery (mm) |
|---|---|---|---|---|---|---|
| Embodiment 1 | 95% | 10% | All-solid | 25 | 8.00% | 1.4 |
| Embodiment 2 | 65% | 10% | All-solid | 25 | 20.80% | 3.9 |
| Embodiment 3 | 75% | 10% | All-solid | 25 | 19.50% | 3.5 |
| Embodiment 4 | 85% | 10% | All-solid | 25 | 13.50% | 2.8 |
| Embodiment 5 | 95% | 10% | All-solid | 10 | 21.30% | 4.5 |
| Embodiment 6 | 95% | 10% | All-solid | 55 | 4.50% | 0.8 |
| Embodiment 7 | 95% | 10% | All-solid | 25 | 10.80% | 2.4 |
| Embodiment 8 | 95% | 10% | All-solid | 25 | 9.60% | 2 |
| Embodiment 9 | 95% | 10% | All-solid | 25 | 12.40% | 2.6 |
| Embodiment 10 | 95% | 10% | All-solid | 25 | 11.50% | 3 |
| Embodiment 11 | 95% | 10% | All-solid | 25 | 10.50% | 2.5 |
| Embodiment 12 | 95% | 10% | All-solid | 25 | 6.90% | 1.2 |
| Embodiment 13 | 95% | 10% | All-solid | 25 | 10.80% | 2.9 |
| Embodiment 14 | 95% | 10% | All-solid | 25 | 7.50% | 1.2 |
| Embodiment 15 | 95% | 10% | All-solid | 25 | 10.20% | 2.3 |
| Embodiment 16 | 95% | 10% | All-solid | 25 | 9.80% | 1.6 |
| Comparative Embodiment 1 | / | / | 1.1 mol/L LiPF₆ | / | 82.50% | 28.7 |
| Comparative Embodiment 2 | / | / | All-solid | 25 | 78.40% | 25.3 |
| Comparative Embodiment 3 | / | 10% | All-solid | 25 | 75.90% | 23.4 |
| Comparative Embodiment 4 | 60% | 10% | All-solid | 25 | 29.60% | 5.3 |
| Comparative Embodiment 5 | 98% | 10% | All-solid | 25 | 7.40% | 1.6 |

The above oxygen content and thickness measurement results of the battery after first-cycle charging show that when the all-solid electrolyte doped with M-MOF, NU-1500, ZIF-8, or ZPF-200 is used as an electrolyte of a lithium-ion battery, the oxygen content of the lithium-ion battery is relatively low, and the increment of thickness of the battery is relatively small. In addition, an excessive or deficient thickness of the solid electrolyte and a low porosity are not conducive to oxygen absorption, indicating that the M-MOF, NU-1500, ZIF-8, and ZPF-200 can promptly absorb the oxygen generated in the lithium-ion battery, reduce the thickness growth of the battery, and suppress the lithium-ion battery from bulging, thereby improving the safety performance of the lithium-ion battery.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. An electrode assembly, comprising:
a positive electrode, a negative electrode, and a solid electrolyte, wherein
the positive electrode contains a lithium supplement material capable of releasing oxygen during first-cycle charging; and
the solid electrolyte contains a first additive, and the first additive is a metal-organic framework compound with a porosity of 65% to 95%.

2. The electrode assembly according to claim 1, wherein the metal-organic framework compound comprises a ligand structure, and the ligand structure contains at least one metal ion among Mg, Mn, Fe, Co, Ni, Cu, or Zn and contains a ligand structure falling into a category of a nitrogen-containing heterocycle, a carboxylic acid, or an imidazole.

3. The electrode assembly according to claim 1 or 2, wherein the metal-organic framework compound comprises at least one of M-MOF-74, NU-1500, ZIF-8, or NPF-200.

4. The electrode assembly according to claim 3, wherein the M in the M-MOF-74 comprises at least one of Mg, Co, Ni, Cu, or Zn; and
optionally, the M in the M-MOF-74 comprises at least one of Mn or Fe.

5. The electrode assembly according to claim 3, wherein the NU in the NU-1500 comprises at least one of Fe, Gr, or Sc.

6. The electrode assembly according to any one of claims 1 to 5, wherein a particle diameter of the first additive is 20 nm to 5 µm, and optionally 50 nm to 2 µm.

7. The electrode assembly according to any one of claims 1 to 6, wherein a porosity of the first additive is 85% to 95%.

8. The electrode assembly according to any one of claims 1 to 7, wherein the solid electrolyte further comprises a second additive, and the second additive comprises at least one selected from a polyolefin polymer, a polynitrile polymer, or a polycarboxylate ester polymer.

9. The electrode assembly according to any one of claims 1 to 8, wherein the solid electrolyte further comprises a lithium salt, and the lithium salt comprises at least one selected from LiPF₆, LiBF₄, LiTFSI, LiClO₄, LiAsF₆, LiBOB, LiDFOB, LiTFOP, LiN(SO₂RF)₂, or LiN(SO₂F)(SO₂RF), in which the substituent RF is CₙF₂ₙ₊₁, and n is an integer ranging from 1 to 10.

10. The electrode assembly according to any one of claims 1 to 9, wherein a thickness of the solid electrolyte is 10 to 100 µm, and optionally 20 to 40 µm.

11. The electrode assembly according to any one of claims 1 to 10, wherein an ionic conductivity of the solid electrolyte at a room temperature is 10⁻⁷ to 10⁻² S/cm, and optionally 10⁻⁴ to 10⁻³ S/cm.

12. The electrode assembly according to any one of claims 1 to 11, wherein a chemical stability window of the solid electrolyte is 4.9 to 5.3 V.

13. The electrode assembly according to any one of claims 1 to 12, wherein the lithium supplement material comprises at least one selected from LiₓM₁O_{0.5(2+x)}, Li₂M₂O₃, Li₂M₃O₄, Li₃M₄O₄, Li₅M₅O₄, or Li₅M₆O₆, wherein
M₁ comprises at least one selected from Ni, Co, Fe, Mn, Zn, Mg, Ca, Cu, or Sn;
M₂ comprises at least one selected from Ni, Co, Fe, Mn, Sn, or Cr;
M₃ comprises at least one selected from Ni, Co, Fe, Mn, Sn, Cr, V, or Nb;
M₄ comprises at least one selected from Ni, Co, Fe, Mn, Sn, Cr, V, Mo, or Nb;
M₅ comprises at least one selected from Ni, Co, Fe, Mn, Sn, Cr, or Mo;
M₆ comprises at least one selected from Ni, Co, or Mn; and
a valence of each element of M₁, M₂, M₃, M₄, M₅, and M₆ is lower than a highest oxidation state of the element.

14. The electrode assembly according to any one of claims 1 to 13, wherein the lithium supplement material comprises at least one selected from Li₂MnO₂, Li₅FeO₄, Li₆CoO₄, Li₂NiO₂, Li₂Cuₓ₁Ni_{1-x1-y1}M_{y1}O₂, Li₃VO₄, or Li₃NbO₄, in which M comprises at least one selected from Zn, Sn, Mg, Fe, or Mn, 0 ≤ x1 ≤ 1, 0 ≤ y1 < 0.1, and optionally 0.2 ≤ x1 ≤ 0.8, and further optionally 0.4 ≤ x1 ≤ 0.6.

15. The electrode assembly according to any one of claims 1 to 14, wherein an average particle diameter of the lithium supplement material is 2 to 50 µm, and optionally 2 to 10 µm.

16. The electrode assembly according to any one of claims 1 to 15, wherein, considering a total mass percent of the positive electrode as 100 wt%, a mass percent of the lithium supplement material is 0.1 wt% to 10 wt%, and optionally 2 wt% to 7 wt%.

17. The electrode assembly according to any one of claims 1 to 16, wherein the positive electrode further contains a positive active material, the positive active material comprises a polyanion oxide, and the polyanion oxide comprises either an olivine structure or a NASICON structure, and optionally is lithium iron phosphate.

18. The electrode assembly according to any one of claims 1 to 17, wherein the positive electrode further contains a positive active material, and the positive active material comprises a lithium transition metal composite oxide, and the lithium transition metal composite oxide comprises at least one of lithium cobalt oxide, lithium nickel oxide, lithium manganese oxide, lithium nickel manganese oxide, or lithium nickel cobalt aluminum oxide.

19. The electrode assembly according to any one of claims 1 to 18, wherein the negative electrode is made of a material comprising one of hard carbon, graphite, or carbon fibers, and optionally graphite.

20. A battery cell, comprising the electrode assembly according to any one of claims 1 to 19.

21. A battery, comprising a plurality of the battery cells according to claim 20.

22. An electrical device, comprising the battery according to claim 21, wherein the battery is configured to provide electrical energy.
